# EUROPÄISCHE PATENTANMELDUNG

(11) **EP 3 100 954 A1**
(43) Veröffentlichungstag der Anmeldung: **07.12.2016**
(21) Anmeldenummer: 15170656.1
(22) Anmeldetag: 04.06.2015
(51) Int. Cl.: B64G 1/00, B64G 1/42

(54) **RAKETE MIT MEHREREN STUFEN**

(71) Anmelder: Airbus DS GmbH, 82024 Taufkirchen (DE)
(72) Erfinder: Sebald, Johannes, 27721 Ritterhude (DE); Öhler, Winfried, 27753 Delmenhorst (DE); Kocik, Rainer, 28359 Bremen (DE)
(74) Vertreter: Marschall, Stefan

(57) **Zusammenfassung**

Offenbart ist eine Rakete mit mehreren unabhängig voneinander antreibbaren Stufen, wobei die Steuer- und/ oder Mess- oder andere Signalen zwischen den Sende- und Empfangseinheiten der einzelnen Raketenstufen bzw. mit Sende- und Empfangseinheiten der zugehörigen Bodenanlagen über drahtlosen Verbindungen ausgetauscht werden. Weiterhin sind autonome elektrische Funktionen auf Stufenebene sowie eine autonome Versorgung mit elektrischer Energie auf Stufenebene am Boden und im Flug vorgesehen. Die einzelnen Raketenstufen sind vorzugsweise jeweils mit einem Computer ausgestattet.

## Beschreibung

Die Erfindung betrifft eine Rakete mit mehreren unabhängig voneinander antreibbaren Stufen.

Die derzeit verwendeten Raketen-Konzepte mit mehreren Stufen benutzen mittels Kabeln und Steckern realisierte elektrisch leitende Verbindungen zwischen diesen, um elektrische Energie und/oder Steuer- und/oder Mess- oder andere Signale zwischen diesen Stufen zu übertragen. Für die Stufentrennung werden dabei spezielle trennfähige Stecker benötigt. Außerdem werden elektrische Schaltungsmaßnahmen getroffen, um zu verhindern, dass die durch die Stufentrennung entstehenden "offenen" Leitungen die Funktionsfähigkeit des elektrischen Systems der Rakete nach der Stufentrennung gefährden, einschränken oder behindern.

Um die Funktionen mit Beteiligung des elektrischen Systems solcher Raketen auf Systemebene, d.h., einer gesamte Rakete, testen zu können, sind elektrische Bodentests in großem Umfang an der komplett integrierten Rakete erforderlich. Diese Tests sind zeitaufwendig und beschränken die Zahl der in einem Zeitraum von einem Startplatz aus startbaren Raketen. Manche Raketenfunktionen sind überhaupt erst bei diesen Tests überprüfbar, und potentiell fehlerhafte Geräte bzw. elektrische Verbindungen sind erst zu diesem Zeitpunkt identifizierbar und Gegenmaßnahmen einleitbar.

In der US 4,723,736 A ist eine Rakete mit einem unabhängigen Antrieb einzelner Raketenstufen der eingangs genannten Art beschrieben. Daneben wird auch auf der Web-Site http://isrohq.vssc.gov.in/isr0dem0v5/index.php/explorationl/chandray aan-1/82-chandrayaan-1/937-chandrayaan-1-the-launcher der Indian Space Research Organisation das PSLV, d.h., das Polar Satellite Launch Vehicle, beschrieben, das über insgesamt vier unabhängige, übereinander angeordnete Raketenstufen verfügt.

Weiterer Stand der Technik ist aus der WO 2008 088330 A2 bekannt, welche eine mehrstufige Rakete offenbart. Dabei sind die Stufen physikalisch miteinander koppelbar.

Aufgabe der Erfindung ist es, eine Rakete der eingangs genannten Art so auszubilden, dass auf möglichst einfache Art eine elektrische Trennung der einzelnen Raketenstufen voneinander realisierbar ist.

Diese Aufgabe wird durch eine Rakete mit den Merkmalen des Patentanspruchs 1 gelöst.

Die Erfindung löst diese Aufgabe, ausgehend von einer Rakete der eingangs genannten Art, durch den Einsatz von drahtlosen Verbindungen zum Austausch von Steuer- und/oder Mess- oder anderen Signalen zwischen den Sende- und Empfangseinheiten der einzelnen Raketenstufen bzw. durch den Einsatz von drahtlosen Verbindungen zum Austausch von Steuer- und/oder Mess- oder anderen Signalen zwischen einzelnen Raketenstufen und Sende- und Empfangseinheiten der Bodenanlage. Vorteilhafte Weiterbildungen sehen darüber hinaus autonome elektrische Funktionen auf Stufenebene sowie eine autonome Versorgung mit elektrischer Energie auf Stufenebene am Boden und im Flug vor.

Die Vorteile, die sich aus der erfindungsgemäßen Lösung ergeben, sind dabei:
- der Wegfall von elektrischen Verbindungen, wie einem Kabelbaum und trennfähigen Steckern, zwischen den Stufen,
- eine Reduzierung des Einflusses der Stufentrennung, dem sogenannten Staging, auf das elektrische System, d.h. die Vermeidung des "offene Leitung"-Problems,
- eine Erhöhung der Testabdeckung der Raketen-Funktionen durch elektrische Tests auf Stufenebene, da die elektrischen Verbindungen zwischen den einzelnen Stufen wegfallen und damit nicht mehr getestet werden müssen,
- eine dazu komplementäre Reduzierung des Testbedarfs auf Raketenebene, da beispielsweise. die elektrischen Verbindungen zwischen den Stufen wegfallen,
- eine Verringerung spät entdeckter Fehler und des damit verbundenen Aufwands an Zeit, Kosten und Qualität,
- die Möglichkeit einer Distanzmessung zwischen den einzelnen Stufen nach erfolgter Stufentrennung
- eine Detektion unvorhergesehener Stufentrennung zur Aktivierung des Sicherheitssystems, d.h. das Entfallen der sogenannten Straps
- die Reduzierung von Fehlerquellen bei der Integration, da die Erstellung von Steckverbindungen zwischen Stufen und oder der Bodenanlage reduziert und/oder beseitigt wird.

Darüber hinaus können die Bodentest-Anlagen bis auf Energieversorgung weitgehend kabellos angebunden und einfach an geänderte Konfiguration angepasst werden. Auf der Bodenseite ist dadurch nur eine Software Anpassung erforderlich. Für die Telemetrie ist zum Beispiel im optimalen Fall nur eine Anpassung des Messstellenplanes erforderlich, eine geänderte Sensorkonfiguration könnte bei Einsatz von "Smart Sensor"-Funktionalitäten sogar automatisch erkannt und der Messstellenplan automatisch aktualisiert werden. Nur die Testgrenzen wären dann gegebenenfalls manuell zu ergänzen.

Nachfolgend soll die Erfindung anhand eines der Zeichnung dargestellten Ausführungsbeispiels näher erläutert werden. Es zeigen
- Fig. 1: die Kommunikation zwischen zwei elektrisch unabhängigen Raketenstufen,
- Fig. 2: die Kommunikation zwischen einer Raketenstufe und einer Bodenanlage und
- Fig. 3: die Kommunikation zwischen einer Rakete, mehreren Raketenstufen und einer Bodenanlage.

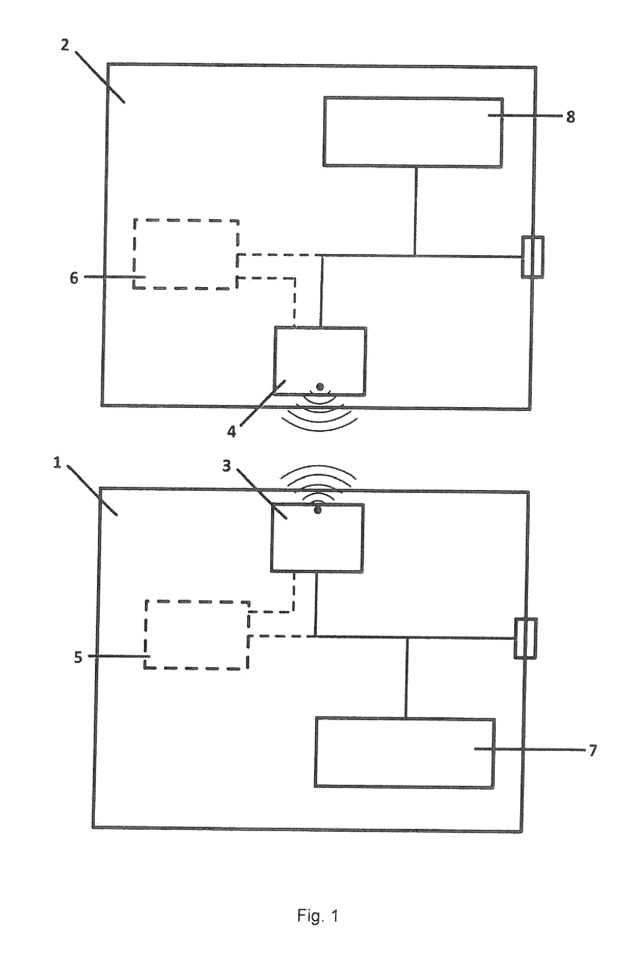

Die Abbildung gemäß Fig. 1 zeigt zwei elektrisch unabhängige Raketenstufen 1, 2, die über kombinierte Sende- und Empfangseinheiten 3 bzw. 4 Steuersignale an die jeweils andere Stufe übermitteln, die dort weiter verarbeitet werden, und damit verbundene Steuerungsaufgaben erfüllen können. Die beiden Sende- und Empfangseinheiten 3 und 4 tauschen dabei Steuer- und/oder Mess- oder andere Signale drahtlos zwischen diesen beiden Stufen 3 und 4 aus, wobei unterschiedliche Verfahren, wie beispielsweise Hochfrequenz oder IR/UV/Vis, eingesetzt werden können.

Die beiden Raketenstufen 1 und 2 können durch stufeneigene, jeweils optional vorgesehene Computer 5 und 6 aber auch autonome Steueraufgaben erfüllen bzw. über diese Computer 5 und 6 die Steuersignale über die Sende- und Empfangseinheiten 3 bzw. 4 an die jeweils andere Raketenstufe 2 bzw. 1 übermitteln und die damit verbundenen Steueraufgaben erfüllen. Damit die beiden Raketenstufen 1 und 2 elektrisch unabhängig voneinander arbeiten können, ist eine stufeneigene Stromversorgung 7 bzw. 8 vorgesehen.

Während des Fluges können von den in der Raketenstufe 1 angebrachten Sensoren Daten, beispielsweise Trägheitsnavigationsdaten, an die Raketenstufe 2 übermittelt werden, um im Computer 6 realisierte GNC-Aufgaben (Guidance-, Navigation- and Control-Aufgaben) zu unterstützen. Überdies kann während der Stufentrennung der Abstand der beiden Raketenstufen 1 und 2 durch Laufzeitmessungen, sogenannte Time of Flight-Messungen, der bei der Signalübertragung zwischen den Sende- und Empfangseinheiten 3 und 4 entstehenden Verzögerung ermittelt werden. Dies ist beispielsweise. wichtig, um zu vermeiden, dass eine Triebwerkszündung zu früh nach der Stufentrennung erfolgt.

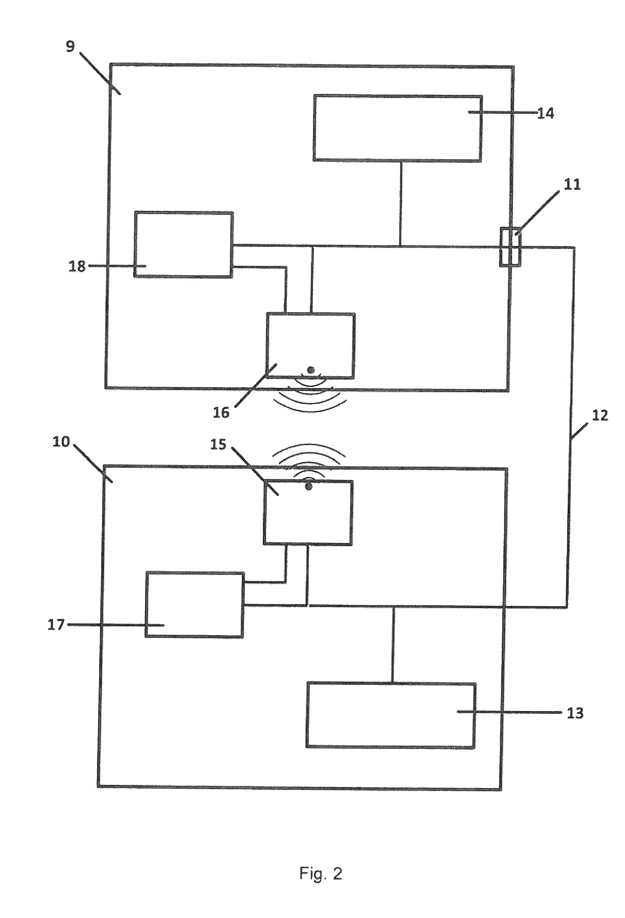

Die Abbildung gemäß Fig. 2 zeigt die Kommunikation zwischen einer Raketenstufe 9 und einer Bodenanlage 10. Über einen während des Raketenstarts trennbaren Stecker 11 wird die Raketenstufe 9 von der Bodenanlage 10 über eine elektrische Leitung 12 mit elektrischer Energie aus einer bodengebundenen elektrischen Energieversorgungsanlage 13 versorgt. Eine elektrische Energieversorgungseinheit 14 der Raketenstufe 9 wird in dieser Phase zwar nicht benötigt, eventuell in dieser elektrischen Energieversorgungseinheit 14 vorhandene Speicherelemente können bei dieser Gelegenheit jedoch aufgeladen werden.

Zwei Sende- und Empfangseinheiten 15 und 16 tauschen drahtlos Steuer- und/oder Mess- oder andere Signale zwischen der Bodenanlage 10 und der Raketenstufe 9 aus, wobei wiederum unterschiedliche Verfahren, wie beispielsweise Hochfrequenz oder IR/UV/Vis, eingesetzt werden können. Dabei kann die gleiche Sende- und Empfangseinheit 4 aus Fig. 1, die auch im Flug benutzt wird, verwendet werden, um die Funktion der Sende- und Empfangseinheit 16 dieser Raketenstufe 9 am Boden zu realisieren.

Ein am Boden vorhandener Computer 17 kann sowohl die für den Flug vorgesehenen Steueraufgaben eines stufeneigenen Computers 18 - sofern ein solcher vorhanden ist - prüfen und überwachen, als auch eigene Steuer- und/oder Mess- oder andere Signale an die Raketenstufe 9 übertragen bzw. von dieser empfangen. Somit ist es auch möglich, dass die Bodenanlage 10 das Verhalten einer im Flug benachbarten Stufe simuliert und so das Flugverhalten der Raketenstufe 9 in großem Umfang prüfen kann.

Im Rahmen der Integration der Raketenstufe 9, die nicht unbedingt am späteren Startplatz der Rakete erfolgen muss, können elektrische Tests am Boden durch die Bodenanlage 10 erfolgen. Hierbei kann die spätere Kommunikation zwischen den Stufen simuliert werden und es kann damit die korrekte Kommunikation der Raketenstufe 9 über die Sende- und Empfangseinheit 16 geprüft werden. Außerdem kann vom Computer 17 über die Sende- und Empfangseinheiten 15 und 16 mit dem stufeneigenen Computer 18 eine Verbindung hergestellt werden, die eine Überprüfung der Stufenfunktionen erlaubt.

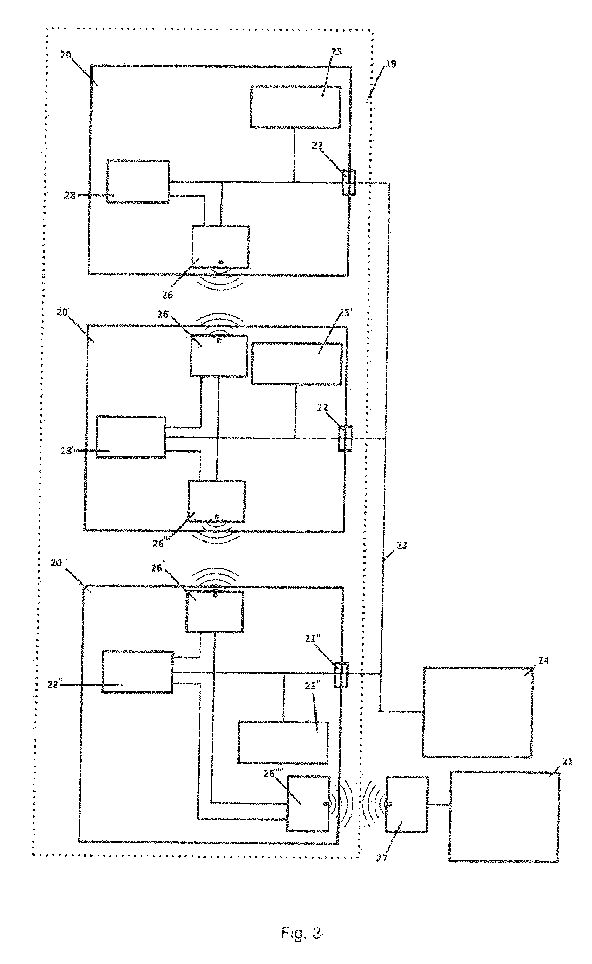

Die Abbildung gemäß Fig. 3 zeigt schließlich die Kommunikation zwischen einer Rakete 19, mehreren Raketenstufen 20, 20' und 20" sowie einer Bodenanlage 21. Über während des Raketenstarts trennbare Stecker 22, 22' und 22" werden die Raketenstufen 20, 20' und 20" von der Bodenanlage 21 über eine oder mehrere elektrische Leitungen 23 mit elektrischer Energie aus einer bodengebundenen elektrischen Energieversorgungsanlage 24 versorgt.

Die elektrischen Energieversorgungseinheiten 25, 25' und 25" der einzelnen Raketenstufen 20, 20' und 20" werden in dieser Phase zwar nicht benötigt, eventuell in diesen elektrischen Energieversorgungseinheiten 25, 25' und 25" vorhandene Speicherelemente können bei dieser Gelegenheit jedoch aufgeladen werden.

Sende- und Empfangseinheiten 26 bis 26"" tauschen jeweils drahtlos Steuer- und/oder Mess- oder andere Signale zwischen den Raketenstufen 20, 20' und 20" aus, und die Sende- und Empfangseinheit 27 der Bodenanlage 21 tauscht über die Sende- und Empfangseinheit 26"" jeweils drahtlos Steuer- und/oder Mess- oder andere Signale mit den Raketenstufen 20, 20' und 20" aus, wobei wiederum unterschiedliche Verfahren, wie beispielsweise Hochfrequenz oder IR/UV/Vis, eingesetzt werden können. Dabei können die gleichen Sende- und Empfangseinheiten 26 bis 26"', die im Flug benutzt werden, verwendet werden, um auch die Funktion am Boden zu realisieren.

Die elektrische Bodenanlage 21 kann sowohl die für den Flug vorgesehenen Steueraufgaben der stufeneigenen Computer 28, 28' und 28", falls solche vorhanden sind, prüfen und überwachen als auch eigene Steuer- und/oder Mess- oder andere Signale an die Raketenstufen 20, 20' und 20" übertragen bzw. von diesen empfangen. Dadurch ist es auch möglich, dass die Bodenanlage 21 das elektrische Verhalten der Rakete 19 für verschiedene Flugphasen am Boden in großem Umfang prüft.

Im Rahmen der Integration der Rakete 19 aus den einzelnen Raketenstufen 20, 20' und 20" können elektrische Tests am Boden durch die Bodenanlage 21 erfolgen. Hierbei kann die spätere Kommunikation zwischen den einzelnen Raketenstufen 20, 20' und 20" geprüft werden und es kann damit die korrekte Kommunikation der Raketenstufen 20, 20' und 20" über die jeweiligen Sende- und Empfangseinheiten 26 bis 26"' geprüft werden. Außerdem kann von der elektrischen Bodenanlage 21 über die Sende- und Empfangseinheiten 26 bis 26"" sowie 27 eine Verbindung zu allen Raketenstufen 20, 20' und 20" erstellt werden, die eine Überprüfung der Funktionen auf Raketenebene erlaubt.

Durch die Vereinheitlichung der drahtlosen Schnittstellen und deren Konfiguration durch Software ist es sehr einfach, auch in einer späten Integrationsphase noch einzelne Stufen auszutauschen (Performance, Fehler, etc.).

Offenbart ist eine Rakete mit mehreren unabhängig voneinander antreibbaren Stufen, wobei die Steuer- und/ oder Mess- oder andere Signalen zwischen den Sende- und Empfangseinheiten der einzelnen Raketenstufen bzw. mit Sende- und Empfangseinheiten der zugehörigen Bodenanlagen über drahtlosen Verbindungen ausgetauscht werden. Weiterhin sind autonome elektrische Funktionen auf Stufenebene sowie eine autonome Versorgung mit elektrischer Energie auf Stufenebene am Boden und im Flug vorgesehen. Die einzelnen Raketenstufen sind vorzugsweise jeweils mit einem Computer ausgestattet.

## Patentansprüche

1. Rakete mit mehreren unabhängig voneinander antreibbaren Stufen, **gekennzeichnet durch** den Einsatz von drahtlosen Verbindungen zum Austausch von Steuer- und/oder Mess- oder anderen Signalen zwischen den Sende- und Empfangseinheiten (3, 4, 16, 26 - 26"") der einzelnen Raketenstufen (1, 2, 9, 20, 20', 20") bzw. **durch** den Einsatz von drahtlosen Verbindungen zum Austausch von Steuer- und/oder Mess- oder anderen Signalen zwischen einzelnen Raketenstufen (1, 2, 9, 20, 20', 20") und Sende- und Empfangseinheiten (15, 27) der Bodenanlage (10, 21).

2. Rakete nach Anspruch 1, **dadurch gekennzeichnet, dass** die einzelnen Raketenstufen (1, 2, 9, 20, 20', 20") jeweils mit einem Computer (5. 6, 18, 28, 28', 28") ausgestattet sind.

3. Rakete nach Anspruch 1 oder 2, **dadurch gekennzeichnet, dass** autonome elektrische Funktionen (5, 6, 18, 28, 28', 28") auf Stufenebene sowie eine autonome Versorgung mit elektrischer Energie auf Stufenebene am Boden (13, 24) und im Flug (7, 8, 14, 25, 25', 25") vorgesehen sind.
